# FASCICULE DE BREVET EUROPEEN

(11) **EP 0 829 658 B1**
(45) Date de publication et mention de la délivrance du brevet: **29.01.2003**
(21) Numéro de dépôt: 97401904.4
(22) Date de dépôt: 08.08.1997
(51) Int. Cl.: F16G 5/20, B29D 29/10

(54) **Procédé de fabrication d'une courroie de transmission et courroie obtenue par ce procédé**
Treibriemen und der dazugehörige Herstellungsprozess
Driving belt and method of fabrication thereof

(30) Priorité: 10.09.1996 FR 9611018
(43) Date de publication de la demande: 18.03.1998
(73) Titulaire: HUTCHINSON, 75008 Paris (FR)
(72) Inventeur: Berthelier, Marc, 37270 Athée S/Cher (FR)
(74) Mandataire: Jacquard, Philippe Jean-Luc

(56) Documents cités:
- EP-A- 0 317 316
- EP-A- 0 429 299
- EP-A- 0 633 408
- EP-A- 0 642 886
- EP-A- 0 694 710
- JP-A- 7 280 040
- US-A- 4 931 118
- PATENT ABSTRACTS OF JAPAN vol. 011, no. 333 (M-637), 30 octobre 1987 & JP 62 113940 A (BANDO CHEM IND LTD), 25 mai 1987,
- DATABASE WPI Week 9601 Derwent Publications Ltd., London, GB; AN 96-003759 XP002032097 & JP 07 280 040 A (MITSUBOSHI BELTING) , 27 octobre 1995

## Description

La présente invention a pour objet un procédé de fabrication d'une courroie de transmission vulcanisée, dite courroie striée, destinée en particulier à un dispositif de transmission automobile, ainsi qu'une courroie obtenue par ce procédé.

On connaît déjà, en particulier de la Demande de brevet Européen EP-642 886 (MITSUBOSHI) une courroie striée présentant une couche dorsale, une couche de coussin dans laquelle sont disposés longitudinalement des câblés et une couche dite de compression dans laquelle sont noyées de fibres de renfort orientées selon une direction latérale de la courroie, et dans laquelle les stries de la courroie sont réalisées par usinage à partir d'une ébauche plane, généralement à l'aide d'une meule, au prix d'une perte de matière qui est très importante puisqu'elle est de l'ordre de 30%. Cet usinage des stries a pour effet de dégager l'extrémité des fibres de renfort de sorte qu'elles dépassent à l'extérieur des stries, mais également de blesser superficiellement la surface des stries en créant des amorces de déchirure, en particulier à la région jointive convexe entre le sommet des stries et les flancs des stries.

Le procédé décrit dans le brevet US-4,931,118 (MITSUBOSHI), dans lequel l'usinage d'une courroie s'effectue à partir de stries dont la forme en V n'est qu'ébauchée, présente pratiquement les mêmes inconvénients.

Il a été mentionné dans la Demande de Brevet EP-633 408 colonne 1, ligne 39 à colonne 2, ligne 10 une technique connue consistant à appliquer une mince couche de caoutchouc au sommet des stries d'une courroie de manière à enrober les fibres dépassantes et à supprimer les amorces de déchirure. Ceci complique la fabrication en lui ajoutant une étape.

La solution proposée dans la Demande EP-642 886, qui consiste à ne pas usiner le sommet des stries et à créer une zone de décrochement concave entre le sommet plat des stries et les flancs des stries, cette zone de décrochement n'étant pas en contact avec la poulie, ne permet de résoudre le problème que là où il se pose le plus, sans arriver à remédier au problème des amorces de déchirure que l'usinage est susceptible de causer, ni bien entendu au problème de la perte de matière.

En pratique, la durée de vie des courroies usinées est généralement inférieure à celle des autres types de courroies.

Il est cependant souhaitable de pouvoir disposer de courroies dont les stries présentent des fibres dépassantes, en raison du fait que ces fibres tendent à diminuer le bruit de fonctionnement de la courroie dans certaines applications.

La présente invention a pour objet un procédé de fabrication d'une courroie de transmission striée, présentant des stries ayant des fibres dépassantes et qui présente une durée de vie élevée.

Un autre objet de l'invention est un procédé de fabrication d'une courroie qui minimise les pertes de matière.

L'invention concerne ainsi un procédé de fabrication d'une courroie de transmission vulcanisée striée, présentant une couche de coussin dans laquelle sont noyés des câblés disposés longitudinalement, ainsi qu'une couche de compression dans laquelle sont noyées des fibres de renfort, et dans laquelle sont ménagées des stries s'étendant longitudinalement, au moins une région de la surface des stries présentant des fibres dépassantes, tel qu'il est défini dans la revendication 1.

Le procédé peut être caractérisé en ce que les fibres ont une longueur comprise entre 0,5 et 10mm et sont présentes dans la couche de compression à raison de 2 à 30 parties de poids pour 100 parties d'élastomère.

Ladite région présentant des fibres dépassantes peut être le flanc des stries. Selon une variante, toute la surface des stries présente des fibres dépassantes.

L'invention concerne également une courroie de transmission striée présentant une couche de coussin en élastomère dans laquelle sont noyés des câblés disposés longitudinalement, ainsi qu'une couche de compression en élastomère dans laquelle sont noyées des fibres de renfort et dans laquelle sont ménagées des stries s'étendant longitudinalement, lesdites fibres dépassant d'au moins une région de la surface des stries, telle que définie dans la revendication 6.

En coupe transversale les stries présentent avantageusement des lignes de mouvement des plis de l'élastomère qui suivent le contour des stries lors d'une opération de moulage et la direction moyenne des fibres suit lesdites lignes de mouvement.

D'autres caractéristiques et avantages de l'invention apparaîtront mieux à la lecture de la description qui va suivre, donnée à titre d'exemple non limitatif, en liaison avec les dessins ci-annexés, dans lesquels :
- la figure 1 représente en coupe transversale une courroie usinée selon l'Art Antérieur,
- les figures 2a et 2b représentent en coupe transversale une courroie moulée et usinée conformément au procédé selon l'invention, respectivement avant et après usinage,
- les figures 3a à 3c illustrent le procédé selon l'invention.

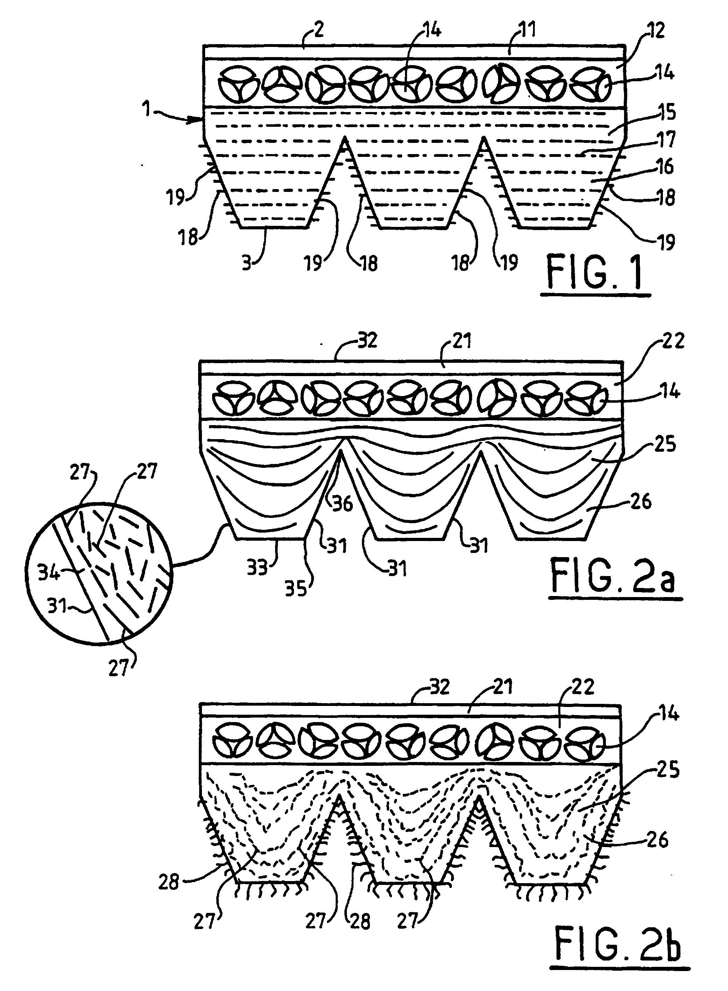

La courroie usinée représentée à la figure 1 comporte une couche dorsale 11, dans laquelle est éventuellement noyé un renfort tissé, une couche de coussin 12 en matériau élastomère dans laquelle sont noyés des câblés 14 par exemple en polyester, en polyamide ou en fibres aramides, et une couche de compression 15 dans laquelle sont noyées des fibres de renfort 17.

La fabrication d'une telle courroie met en oeuvre la réalisation d'une ébauche plane constituée d'un empilement de couches, après quoi l'ensemble est vulcanisé en autoclave à une pression de l'ordre de 6 à 8 bars.

Après vulcanisation, les stries 16 sont usinées par meulage pour produire la courroie représentée à la figure la, dans laquelle les flancs 19 des stries 16 présentent des fibres dépassantes 18. Comme le montre la figure la, l'orientation générale des fibres 17 est transversale (donc parallèle au plan de coupe), et parallèle aux bords 2 et 3 de la courroie. Après usinage, les fibres dépassantes 18 ont une direction préférentielle qui conserve bien entendu celle de l'orientation générale des fibres 17.

Un tel usinage dans la masse, outre le fait qu'il implique une perte importante de matière (de l'ordre de 30%) implique en outre une certaine fragilisation de la surface des stries 16, ici les flancs 19, qui a fait l'objet d'un usinage, ainsi que le montre la Demande de Brevet Européen précitée EP-633 408.

La courroie selon l'invention, représentée après moulage et vulcanisation à la figure 2a, et après usinage à la figure 2b, comporte une couche dorsale 21 dans laquelle est éventuellement noyé un renfort tissé, une couche de coussin 22 dans laquelle sont noyées des câblés 14 par exemple en polyester, en polyamide ou en fibres aramides, etc..., et une couche de compression 25 dans laquelle sont noyées des fibres 27, par exemple des fibres naturelles ou synthétiques de longueur comprise entre 0,5 mm et 10 mm qui sont présentes dans la couche de compression 25 à raison de par exemple 2 à 30 parties en poids pour 100 parties d'élastomère.

La fabrication d'une courroie selon l'invention met en oeuvre la réalisation d'une ébauche plane constituée d'un empilement de couches, après quoi l'ensemble est moulé par exemple dans un hydro-moule à une pression de 20 bars, puis vulcanisé, de manière à obtenir la courroie représentée à la figure 2a. Cette courroie comporte des stries 26 dont le profil est moulé, les stries 26 ayant un sommet 33 et des flancs 31, mais ce profil n'est pas à la cote définitive des stries 26. En effet, l'étape ultérieure d'usinage va donner la courroie définitive représentée à la figure 2b.

Comme le montre la figure 2a, la direction générale des fibres 27 est très différente de celle de la figure 1. En effet, les fibres 27 tendent lors du moulage à s'aligner avec la ligne de mouvement des plis du caoutchouc, qui lors du moulage suit le contour des stries 26 et ce d'autant plus fidèlement que les lignes de mouvement se rapprochent de la surface des stries 26. Au voisinage de la surface des stries, la direction générale des fibres 27 est pratiquement parallèle à la surface des stries 26 sur les flancs 31 et sur le sommet 33. Aux régions de jonction 35 entre le sommet 33 et les flancs 31, et dans les fonds 36 des stries 26, cette direction change progressivement. En outre, on constate qu'il existe après moulage une couche de peau ou couche limite 34 d'épaisseur d à la surface (31, 33) des stries 26, dans laquelle les fibres 27 ne sont pas présentes (voir l'encadré de la figure 2a). Cette couche présente une profondeur de l'ordre de 0,1 mm.

L'étape d'usinage selon l'invention consiste à enlever cette couche de peau 34 et à régler la profondeur d'usinage de préférence pour qu'elle soit juste suffisante pur dégager l'extrémité 28 des fibres 27 qui bordent la couche de peau 34. Un tel usinage, dont la profondeur est à peine supérieure à la profondeur de la couche 34, évite de générer des entailles à la surface de l'élastomère constituant les stries 26 et donc de créer des amorces de déchirure superficielle préjudiciables à la durée de vie de la courroie. En outre, si l'orientation préférentielle des fibres 27 est, au voisinage de la paroi 31, sensiblement parallèle à celle-ci, on constate cependant qu'il existe une dispersion notable de l'orientation des fibres 27, qui est très supérieure à la faible dispersion de l'orientation des fibres 17 à la figure 1. Cette dispersion est favorable à l'effet de coussin procuré par les fibres 27, en particulier sur le flanc 31 des stries.

### Exemple comparatif

Cet exemple correspond à un test de vieillissement accéléré réalisé en équipant un moteur Diesel successivement de trois courroies de même type (6 stries ayant un pas de 3,56 mm), mais fabriquées selon des procédés différents, à savoir :
Courroie n° 1 : courroie usinée selon l'Art Antérieur.
Courroie n° 2 : courroie moulée selon l'Art Antérieur.
Courroie n° 3 : courroie moulée et usinée selon l'invention.

L'essai est poursuivi jusqu'à ce que l'on constate une séparation entre les couches 12 et 15 (ou 22 et 25).

Pour une durée de vie égale à 100 pour la courroie n° 1, on constate une durée de vie égale à 142 pour la courroie n° 2 et à 173 pur la courroie n° 3.

C'est la courroie usinée qui présente la durée de vie la plus faible. On notera que le test mis en oeuvre est un essai de décollement interfacial pour lequel la pression de vulcanisation ou de moulage a une importance notable.

La comparaison des durées de vie entre la courroie n° 3 et la courroie n° 2 moulées à la même pression montre que l'étape supplémentaire d'usinage selon l'invention augmente notablement la durée de vie de la courroie, ce qui est particulièrement surprenant si l'on s'en tient à l'enseignement de la Demande de Brevet JP-59 4196 précitée et de la Demande de Brevet Européen EP-633 408 précitée. De plus, la durée de vie de la courroie n° 3 est très supérieure à celle de la courroie n ° 1, alors que son procédé de fabrication est nettement plus économique puisque l'étape d'usinage selon l'invention conduit à enlever une épaisseur marginale de matière d'où un enlèvement de matière limité à quelques % (à comparer avec l'enlèvement d'environ 30 % de matière pour une courroie usinée).

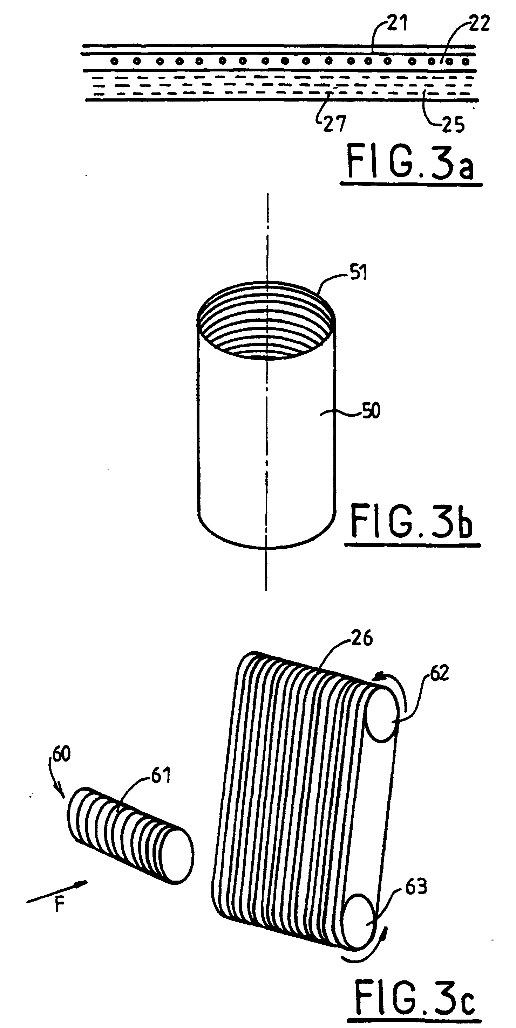

Les figures 3a à 3c illustrent le procédé selon l'invention.

La figure 3a illustre la réalisation d'une ébauche présentant les couches 21, 22 et 25. L'orientation générale des fibres 27 est transversale et parallèle aux faces de l'ébauche.

La figure 3b illustre le moulage sous pression de l'ébauche dans un hydro-moule 50 présentant une contre-empreinte 51 ayant un profil correspondant à celui des stries 26 avant usinage (figure 2a). L'étape de vulcanisation est généralement réalisée dans l'hydro-moule 50, à une pression de l'ordre de 20 bars.

La figure 3c illustre l'étape d'usinage à l'aide d'une meule 60 présentant la contre-empreinte 61 des stries 26 dans leur dimension définitive. A cet effet, l'ébauche vulcanisée est montée en rotation sur des poulies 62 et 63 et la meule 60 est approchée de l'ébauche pour réaliser la rectification à la profondeur désirée comme indiqué ci-dessus pour obtenir la courroie représentée à la figure 2b. Après usinage, la courroie est généralement découpée de manière connue en une pluralité de courroies individuelles.

## Revendications

1. Procédé de fabrication d'une courroie de transmission vulcanisée striée, présentant une couche de coussin (22) en élastomère dans laquelle sont noyés des câblés (14) disposés longitudinalement, ainsi qu'une couche de compression (25) en élastomère dans laquelle sont noyées des fibres de renfort (27), et dans laquelle sont ménagées des stries (26) s'étendant longitudinalement, au moins une région de la surface des stries (26) présentant des fibres dépassantes, procédé dans lequel
a) on forme une ébauche présentant au moins ladite couche de coussin (22) et ladite couche de compression (25) ;
**caractérisé en ce qu'**il présente les étapes suivantes :
b) mouler sous pression ladite ébauche dans un moule (50) comprenant une contre-empreinte (51) des stries (26), la contre-empreinte ayant un profil tel que les stries (26) de la courroie présentent dans ladite région qui est le flanc (31) des stries (26) un excédent de matière d'épaisseur nominale e sensiblement comprise entre 1 et 2 fois l'épaisseur de la couche de peau (34) de l'élastomère à la surface des stries (26) ;
c) vulcaniser l'ébauche ;
d) usiner les stries (26) de la courroie à leur dimension définitive en enlevant ledit excédent de matière de manière à faire apparaître une extrémité dépassante (28) des fibres (27).

2. Procédé selon la revendication 1, **caractérisé en ce que** ladite épaisseur nominale est sensiblement comprise entre 0,1 mm et 0,3 mm.

3. Procédé selon une des revendications précédentes, **caractérisé en ce que** les fibres (27) ont une longueur comprise entre 0,5 et 10 mm et sont présentes dans la couche de compression (25) à raison de 2 à 30 parties en poids pour 100 parties d'élastomère.

4. Procédé selon une des revendications précédentes, **caractérisé en ce que** l'étape d est réalisée avec une meule tournante (60) ayant un profil correspondant en négatif au profil nominal à usiner.

5. Procédé selon une des revendications 1 à 4, **caractérisé en ce que** toute la surface des stries (26) présente des fibres dépassantes (27, 28).

6. Courroie de transmission striée présentant une couche de coussin (22) en élastomère dans laquelle sont noyés des câblés (14) disposés longitudinalement, ainsi qu'une couche de compression (25) en élastomère dans laquelle sont noyées des fibres de renfort (27) et dans laquelle sont ménagées des stries (26) s'étendant longitudinalement, lesdites fibres (27) dépassant d'au moins une région de la surface des stries qui est le flanc (31) des stries (26), **caractérisée en ce que**, au moins dans le flanc (31) des stries (26) et au voisinage de la surface du flanc (31) des stries (26), la direction générale des fibres de renfort est pratiquement parallèle à la surface des stries (26) sur les flancs (31).

7. Courroie selon la revendication 6, **caractérisée en ce que** les stries (26) présentent sur toute leur surface, des fibres de renfort (27) ayant une extrémité dépassante (28).

8. Courroie selon une des revendications 6 ou 7, **caractérisée en ce que**, en coupe transversale, les stries (26) présentent des lignes de mouvement des plis de l'élastomère suivant le contour des stries (26) et **en ce que** la direction moyenne des fibres (27) suit lesdites lignes de mouvement.

9. Courroie selon une des revendications 6 à 8, **caractérisée en ce que** les fibres de renfort (27) ont une longueur comprise entre 0,5 et 10 mm et sont présentes dans la couche de compression à raison de 2 à 30 parties en poids pour 100 parties d'élastomère.

## Patentansprüche

1. Verfahren zur Herstellung eines gerippten bzw. gezahnten vulkanisierten Treibriemens mit einer Polsterschicht (22) aus Elastomermaterial, in der der Länge nach angeordnete Kordfäden (14) eingebettet sind, sowie einer Kompressionsschicht (25) aus Elastomermaterial, in der Verstärkungsfasern (27) eingebettet sind und in der sich der Länge nach erstreckende Rippen bzw. Zahnungen (26) vorgesehen sind, wobei zumindest ein Bereich der Oberfläche der Rippen (26) vorstehende Fasern aufweist, bei dem
a) ein Rohling ausgebildet wird, der zumindest die Polsterschicht (22) und die Kompressionsschicht (25) aufweist;
wobei das Verfahren **dadurch gekennzeichnet ist, daß** es die folgenden Schritte aufweist:
b) Preßformen des Rohlings in einer Form (50) mit einem Gegenrelief (51) für die Rippen (26), wobei das Gegenrelief ein derart beschaffenes Profil hat, daß die Rippen (26) des Riemens in dem genannten Bereich, bei dem es sich um die Flanke (31) der Rippen (26) handelt, einen Materialüberschuß mit einer nominellen Dicke e aufweisen, die im wesentlichen zwischen der einfachen und zweifachen Dicke der Außenschicht (34) des Elastomermaterials an der Oberfläche der Rippen (26) beträgt;
c) Vulkanisieren des Rohlings;
d) maschinelles Bearbeiten der Rippen (26) des Riemens auf ihre endgültigen Abmessungen durch Abheben des Materialüberschusses, so daß ein vorstehendes Ende (28) der Fasern (27) herausgearbeitet wird.

2. Verfahren nach Anspruch 1, **dadurch gekennzeichnet, daß** die nominelle Dicke im wesentlichen zwischen 0,1 mm und 0,3 mm liegt.

3. Verfahren nach einem der vorhergehenden Ansprüche, **dadurch gekennzeichnet, daß** die Fasern (27) eine Länge zwischen 0,5 und 10 mm aufweisen und in der Kompressionsschicht (25) in einem Verhältnis von 2 bis 30 Gewichtsteilen auf 100 Teile Elastomermaterial vorliegen.

4. Verfahren nach einem der vorhergehenden Ansprüche, **dadurch gekennzeichnet, daß** der Schritt d mittels einer drehenden Schleifeinrichtung (60) mit einem Profil durchgeführt wird, das im Negativ dem durch die maschinelle Bearbeitung herzustellenden nominellen Profil entspricht.

5. Verfahren nach einem der Ansprüche 1 bis 4, **dadurch gekennzeichnet, daß** die gesamte Oberfläche der Rippen (26) vorstehende Fasern (27, 28) aufweist.

6. Gerippter bzw. gezahnter Treibriemen mit einer Polsterschicht (22) aus Elastomermaterial, in der der Länge nach angeordnete Kordfäden (14) eingebettet sind, sowie einer Kompressionsschicht (25) aus Elastomermaterial, in der Verstärkungsfasern (27) eingebettet sind und in der sich der Länge nach erstreckende Rippen bzw. Zahnungen (26) vorgesehen sind, wobei die Fasern (27) mindestens aus einem Oberflächenbereich der Rippen vorstehen, bei dem es sich um die Flanke (31) der Rippen (26) handelt, **dadurch gekennzeichnet, daß** die durchschnittliche Richtung der Verstärkungsfasern zumindest in der Flanke (31) der Rippen (26) und in der Nähe der Oberfläche der Flanke (31) der Rippen (26) im wesentlichen parallel zur Oberfläche der Rippen (26) auf den Flanken (31) ist.

7. Riemen nach Anspruch 6, **dadurch gekennzeichnet, daß** die Rippen (26) über ihre gesamte Oberfläche Verstärkungsfasern (27) mit einem vorstehenden Ende (28) aufweisen.

8. Riemen nach einem der Ansprüche 6 oder 7, **dadurch gekennzeichnet, daß** die Rippen (26) im Querschnitt Bewegungslinien der Faltungen des Elastomermaterials aufweisen, welche der Kontur der Rippen (26) folgen; und daß die durchschnittliche Richtung der Fasern (27) diesen Bewegungslinien folgt.

9. Riemen nach einem der Ansprüche 6 bis 8, **dadurch gekennzeichnet, daß** die Verstärkungsfasern (27) eine zwischen 0,5 und 10 mm liegende Länge aufweisen und in der Kompressionsschicht in einem Verhältnis von 2 bis 30 Gewichtsteilen auf 100 Teile Elastomermaterial vorliegen.

## Claims

1. A method of producing a vulcanized grooved transmission belt having an elastomeric cushioning-layer (22) in which longitudinally disposed cables (14) are embedded and also an elastomeric compression layer (25) in which reinforcing fibres (27) are embedded and in which longitudinally extending grooves (26) are provided, at least one area of the surface of the grooves (26) having projecting fibres, a method in which
a) a blank is formed having at least the cushioning layer (22) and the said compression layer (25);
**characterized in that** it comprises the following steps:
b) the said blank is moulded under pressure in a mould (50) having a counter-impression (51) of the grooves (26), the counter-impression having a profile such that the grooves (26) of the belt have in the said area that is the flank (31) of the grooves (26), an excess of material of nominal thickness e substantially comprised between 1 and 2 times the thickness of the skin layer (34) of the elastomer at the surface of the grooves (26);
b) the blank is vulcanized;
c) the grooves (26) of the belt are machined to their final dimensions by removing the said excess material so as to cause the appearance of a protruding end (28) of the fibres (27).

2. A method according to claim 1, **characterized in that** the said nominal thickness is substantially comprised between 0.1 mm and 0.3 mm.

3. A method according to one of the preceding claims, **characterized in that** the fibres (27) are of a length comprised between 0.5 and 10 mm and are present in the compression layer (25) at the rate of 2 to 30 parts by weight to 100 parts of elastomer.

4. A method according to one of the preceding claims **characterized in that** stage d is carried out with a rotating mould (60) having a profile which, in its negative form, corresponds to the nominal profile to be machined.

5. A method according to one of claims 1 to 4, **characterized in that** the entire surface area of the grooves (26) exhibits protruding fibres (27, 28).

6. A grooved transmission belt having an elastomeric cushioning layer (22) in which longitudinally disposed cables (14) are embedded, and also an elastomeric compression layer (25) in which the reinforcing fibres (27) are embedded and in which longitudinally extending grooves (26) are provided, the said fibres (27) protruding from at least one region of the surface of the grooves which is the flank (31) of the grooves (26), **characterized in that**, at least in the flank (31) of the grooves (26) and in the vicinity of the surface of the flank (31) of the grooves (26), the general direction of the reinforcing fibres is practically parallel to the surface of the grooves (26) on the flanks (31).

7. A belt according to claim 6, **characterized in that** the grooves (26) have, over their entire surface area, reinforcing fibres (27) having a protruding end (28).

8. A belt according to one of claims 6 or 7, **characterized in that**, in cross section, the grooves (26) display lines of movement of the folds in the elastomer following the contour of the grooves (26) and **in that** the mean direction of the fibres (27) follows the said lines of movement.

9. A belt according to one of claims 6 to 8, **characterized in that** the length of the reinforcing fibres (27) are comprised between 0.5 and 10 mm and **in that** they are present in the compression layer at the rate of 2 to 30 parts by weight to 100 parts of elastomer.
